# EUROPÄISCHE PATENTSCHRIFT

(11) **EP 3 597 616 B1**
(45) Veröffentlichungstag und Bekanntmachung des Hinweises auf die Patenterteilung: **09.06.2021**
(21) Anmeldenummer: 19179752.1
(22) Anmeldetag: 12.06.2019
(51) Int. Cl.: C04B 28/02, C04B 28/04, C04B 28/08

(54) **ZEMENTÄRES BINDEMITTEL ZUR HERSTELLUNG EINES AUF HARTGESTEINSPLITT BASIERENDEN FREIFLÄCHENBELAGS**
CEMENTITIOUS BINDER FOR PRODUCING A FREE SURFACE PAVING FILLED WITH HARD ROCK PEBBLES
LIANT CIMENTAIRE DESTINÉ À LA FABRICATION D'UN PAVAGE DE SURFACE LIBRE À BASE DE GRAVILLONS DURS

(30) Priorität: 17.07.2018 AT 506172018
(43) Veröffentlichungstag der Anmeldung: 22.01.2020
(73) Patentinhaber: Fleischanderl, Markus, 4262 Leopoldschlag (AT)
(72) Erfinder: Fleischanderl, Markus, 4262 Leopoldschlag (AT)
(74) Vertreter: Hübscher & Partner Patentanwälte GmbH

(56) Entgegenhaltungen:
- WO-A1-2017/029883
- CN-A- 101 157 527
- DE-A1- 2 623 083
- DE-A1- 2 628 008
- FR-A- 1 263 021
- US-A1- 2003 131 764
- US-A1- 2011 259 246
- US-A1- 2013 233 208
- US-A1- 2015 376 061
- US-A1- 2017 073 269
- US-B1- 9 023 149
- DATABASE WPI Week 201718 23. Februar 2017 (2017-02-23) Thomson Scientific, London, GB; AN 2017-13689K XP002796297, TERASHIMA ISAO; SASAKI TAKASHI; WATANABE AKIRA: "WEED CONTROL MATERIAL AND METHOD FOR USING SAME", & WO 2017/029883 A1 (DENKA CO LTD) 23. Februar 2017 (2017-02-23)
- DATABASE WPI Week 200346 18. Februar 2003 (2003-02-18) Thomson Scientific, London, GB; AN 2003-486482 XP002796298, YAMADA SHIGETO: "MATERIAL FOR PREVENTING GROWTH OF WEED AND METHOD FOR CONSTRUCTING LAYER FOR PREVENTING GROWTH OF WEED ON GROUND USING THE SAME", & JP 2003 047388 A (YBK KOGYO KK) 18. Februar 2003 (2003-02-18)
- Anonymous: "KANNE BIO FERMENTGETREIDE FLÜSSIG BODEN/PFLANZEN 5 KG", PRODUKTE FÜR BODEN UND PFLANZEN, 1 January 2021 (2021-01-01), pages 1-8, XP055775403, DE Retrieved from the Internet: URL:https://www.kanne-brottrunk.de/de/prod ukte/fuer-die-landwirtschaft/fuer-boden-un d-pflanzen/ [retrieved on 2021-02-12]

## Beschreibung

Die Erfindung bezieht sich auf ein Bindemittel zur Herstellung eines auf Hartgesteinsplitt basierenden Freiflächenbelags mit Zement, wobei das Bindemittel 52 - 60 Gew. % Zement und 30 - 40 Gew. % eines basischen Gesteinsmehls umfasst und dass der Zement wenigstens 30 Gew. % Puzzolanbestandteile als Zuschlagstoff aufweist.

Um Unkrautwachstum beispielsweise auf Straßenbanketten zu verhindern, sind aus dem Stand der Technik Bindemittel auf Basis von Calciumaluminathaltigem Zement zur Herstellung von Bankettbodenbelägen bekannt (WO 2017029883 A1). Nachteilig ist daran allerdings, dass es aufgrund des Calciumaluminats zu einer hohen Hydratationswärmeentwicklung während des Abbindevorganges des mit Wasser angesetzten Bindemittels kommt, wodurch zufolge der daraus resultierenden Zwangsspannungen Schwindungsrisse entstehen können, durch welche wiederum Unkraut durchwachsen kann. Ein weiterer Nachteil besteht darin, dass mit derartigen Bindemitteln zubereitete Freibelagsflächen insbesondere bei wechselnden Witterungsbedingungen zu Ausblühungen und Fleckenbildungen aufgrund ungebundenen Kalks im ausgehärteten Bodenbelag neigen. Aufgrund der damit verbundenen Stabilitäts- und Erscheinungsmängel sind derartige Bindemittel zur Herstellung von begehbaren, dekorativen Freibelagsflächen in Gärten oder öffentlichen Grünflächen nicht geeignet.

Aus dem Stand der Technik sind überdies Zement und Gesteinssplitt umfassende, drainagefähige Freiflächenbelagszubereitungen bekannt, wobei sich zwischen den Gesteinskörnern Hohlräume zur Ableitung von Oberflächenwasser ausbilden. Um eine ausreichende Festigkeit bzw. Tragfähigkeit des ausgehärteten Freiflächenbelages sicherzustellen, muss dieser eine Schichtdicke von mindestens 5 cm aufweisen. Nachteilig ist allerdings, dass es einerseits aufgrund der großen Hohlräume zu Unkrautwuchs zufolge sich darin anlagernder Erde kommen kann bzw. Unkraut die Belagsschicht durchwächst und andererseits die unter dem Belag befindlichen Böden durch das abgeleitete bzw. durchsickernde Wasser auf Dauer ausgelaugt und somit anfällig für Bodenerosion werden. Letzteres kann zur Folge haben, dass der Belag aufgrund des erodierten Bodenfundamentes Unebenheiten ausbildet und schlimmstenfalls bei Belastung einbricht. Zudem kommt, dass eine Nachbearbeitung des ausgehärteten Belages, beispielsweise um Aussparungen für nachträglich in den Belag eingesetzte Pflanzen oder Beleuchtungseinrichtungen zu schaffen, aufgrund der notwendigen großen Schichtdicken kaum möglich ist.

Aus der DE2623083A1 sind zementäre Bindemittel bekannt, die neben Lavagesteinsmehl auch Flugasche umfassen. Solche Bindemittel werden insbesondere zur Herstellung von Tragschichten als Unterbau für bituminöse Decken, beispielsweise Straßendecken, eingesetzt.

Um sowohl einer Erosion als auch einer Versauerung des Bodens entgegenzuwirken, sind Bodenhilfszusätze auf Basis von Gesteinsmehl bekannt, die dem Boden wichtige Mineralstoffe und Spurenelemente zur Verfügung stellen. Dadurch wird auch das Pflanzenwachstum einschließlich dem Wachstum von Unkraut begünstigt, weshalb der Einsatz von Gesteinsmehl zur Herstellung von unkrautunterdrückenden Freiflächenbelägen bisher vermieden worden ist.

Der Erfindung liegt somit die Aufgabe zugrunde, unkrautunterdrückende Freiflächenbeläge zu schaffen, die langfristig ein ebenflächiges und optisch ansprechendes Erscheinungsbild aufweisen.

Ausgehend von einem Bindemittel der eingangs geschilderten Art löst die Erfindung die gestellte Aufgabe dadurch, dass das basische Gesteinsmehl mit Milchsäurebakterien angereichert ist.

Dem unter dem Freiflächenbelag liegenden Boden werden mit Hilfe von Sickerwasser durch das im Bindemittel enthaltene basische Gesteinsmehl, vorzugsweise auf Basis von Diabas -oder Doleritgesteinen, wichtige Nährstoffe zugeführt und ein basisches Bodenmilieu erzielt, wodurch einer Bodenerosion entgegengewirkt wird. Dabei ergibt sich grundsätzlich das Problem, dass durch die im Gesteinsmehl enthaltenen Inhaltsstoffe wie Siliciumdioxid, Kalk und diverse Alkalien sowie durch das vorherrschende basische Milieu in Zusammenwirkung mit Puzzolan-haltigem Zement verstärkt Alkali-Aggregat-Reaktionen (AAR) auftreten, die zu Kristallisationsrissen und Gefügeschäden im ausgehärteten Freiflächenbelag führen. Es hat sich jedoch überraschenderweise gezeigt, dass aufgrund der Kombination von basischem Gesteinsmehl mit einem Massenanteil von 30 - 40 % und Puzzolan-haltigem Zement mit einem Massenanteil von 52 - 60 %, wobei der Massenanteil der Puzzolane wenigstens 30 % am Zement beträgt, einerseits Kalk zufolge der Bildung von Calciumsilikathydraten wirksam abgebunden wird und sich andererseits ein hochfestes Gefüge mit guter Elastizität ausbildet. Zudem hat sich gezeigt, dass die beim Anmischen mit Wasser eintretende Abbindereaktion des erfindungsgemäßen Bindemittels verzögert verläuft, wodurch es insgesamt nur zu einer geringen Hydratationswärmeentwicklung kommt. Folglich können sowohl AAR-induzierte Kristallisationsrisse als auch Schwindungsrisse, sowie Ausblühungen und Fleckenbildungen weitgehend vermieden und ein stabiles, das Durchwachsen von Unkraut verhinderndes Schichtgefüge geschaffen werden. Insgesamt wird durch die erfindungsgemäßen Merkmale gewährleistet, dass damit für Freiflächen ein auf Dauer ebenflächiger und tragfähiger Bodenbelag mit einem gleichmäßigen und optisch ansprechenden Erscheinungsbild hergestellt werden kann. Um zudem das Erscheinungsbild weiter zu verbessern, ohne die erfindungsgemäßen Wirkungen zu beeinträchtigen, kann gemäß einer Ausführungsform vorgesehen sein, dass dem Bindemittel Eisenoxidpigmente, vorzugsweise mit einem Massenanteil von 4 bis 8 %, zugegeben werden. Dadurch kann der fertige Freiflächenbelag in unterschiedlichen Farbtönen eingefärbt werden, wobei eine hohe Farbechtheit und Witterungsbeständigkeit erzielt wird.

Um sowohl eine gute Wasserdurchlässigkeit zu ermöglichen und dabei die mechanischen Eigenschaften des Freiflächenbelags weiter zu verbessern wird vorgeschlagen, dass das basische Gesteinsmehl Korngrößen von 1 µm bis 90 µm, vorzugsweise von 1 µm bis 40 µm aufweist. Zufolge dieser Maßnahmen kann der als Füllstoff eingesetzte Hartgesteinsplitt besser in der Bindemittelmatrix dispergieren, wodurch Gesteinsplittagglomerationen vermieden werden. Dadurch kann die Festigkeit und Elastizität des Freiflächenbelags weiter verbessert werden, während durch die gleichmäßige Verteilung des Hartgesteinssplitts in der Bindemittelmatrix die Wasserdurchlässigkeit unbeeinträchtigt bleibt.

Um die Ebenflächigkeit des Freiflächenbelages zu verbessern, ist das basische Gesteinsmehl erfindungsgemäss mit Milchsäurebakterien angereichert. Diese als effektive Mikroorganismen arbeitende Milchsäurebakterien bewirken eine Verbesserung des unter dem Freiflächenbelag liegenden Bodens, indem Schädlingstiere sowie schadhafte Keime und Pilze unterdrückt werden und eine Bodenerosion verhindert wird, ohne dass dabei die durch Umwandlungsprozesse der Milchsäurebakterien entstehenden Säuren das basische Bodenmilieu beeinträchtigen.

Die Erfindung bezieht sich auch auf eine Freiflächenbelagszubereitung mit Zugabewasser, Hartgesteinsplitt und einem erfindungsgemäßen Bindemittel. Der Hartgesteinsplitt kann beispielsweise auf Granit, Basalt oder Quarzgesteinen basieren. Zur Herstellung der Zubereitung werden das erfindungsgemäße Bindemittel, der Hartgesteinsplitt und Zugabewasser beispielsweise mit einfachen Hilfswerkzeugen, wie Eimer und Bohrmaschinenquirl bzw. einer handelsüblichen Betonmischmaschine vermengt und dispergiert. Anschließend wird die angemischte Zubereitung mit Werkzeugen wie beispielsweise Kelle und Reibebrett auf dem zu beschichtenden Erdboden aufgetragen und härtet in weiterer Folge aus. Der Aushärtevorgang ist in der Regel nach rund 24 Stunden abgeschlossen, wonach der Freiflächenbelag begeh- und nachbearbeitbar ist. Die ausgehärtete und ebenmäßige Oberfläche des Freiflächenbelages kann zudem auf einfache Weise mit Besen, Gartenschlauch oder Laubsauger gereinigt werden. Besonders günstige Herstellungsbedingungen ergeben sich in diesem Zusammenhang, wenn das Massenverhältnis von Bindemittel zu Zugabewasser im Bereich von 1 : 0,4 bis 1 : 0,6 und das Massenverhältnis von Bindemittel zu Hartgesteinsplitt im Bereich von 1 : 6 bis 1 : 7 liegt.

Um sowohl eine ausreichende Tragfähigkeit als auch Wasserdurchlässigkeit der Freibelagsfläche sicherzustellen und dabei eine nachträgliche Bearbeitung des Belages zu ermöglichen wird vorgeschlagen, dass der Hartgesteinsplitt Korngrößen von 2 mm bis 5 mm aufweist. Zufolge dieser Maßnahme sind bereits Schichtdicken der Freibelagsfläche von 2 cm ausreichend, um einen möglichst stabilen und dennoch wasserdurchlässigen Belag zu erhalten, der zudem einfach mit beispielsweise Stemmwerkzeugen oder Kernlochbohrern bearbeitet werden kann, um entsprechende Bereiche für Pflanzungen oder Beleuchtungseinrichtungen wie Lichtspots freizulegen. Aufgrund der Bodenverbesserungseigenschaften des erfindungsgemäßen Bindemittels sind nachträglich in die freigelegten Bereiche eingesetzte Pflanzen zudem nicht mehr auf Fremderde angewiesen.

### Ausführungsbeispiel:

Ein erfindungsgemäßes Bindemittel umfasst 55 Gew. % Trasszement, 38 Gew. % mit angetrockneten Milchsäurebakterien angereichtes Dolerit-Urgesteinsmehl und 7 Gew. % rotbraune Eisenoxidpigmente. Der Trasszement enthält 35 Gew. % Puzzolanbestandteile. Das Dolerit-Urgesteinsmehl weist eine Korngröße von 40 µm auf.

Eine Freiflächenbelagszubereitung umfasst 2,125 l Zugabewasser, 25 kg Granitsplitt mit einer Korngröße von 2,5 mm, und 4kg eines erfindungsgemäßen Bindemittels.

Die Freiflächenbelagszubereitung wird in einem Betonmischer angerührt und anschließend auf einen zu beschichtenden Gartenerdboden mit Kelle und Reibebrett aufgetragen und glattgestrichen, wobei der Freiflächenbelag eine Schichtdicke von 2 cm aufweist. Nach 24 Stunden ist der Freiflächenbelag ausgehärtet und somit begeh- und nachbearbeitbar.

## Patentansprüche

1. Bindemittel zur Herstellung eines auf Hartgesteinsplitt basierenden Freiflächenbelags mit Zement, wobei das Bindemittel 52 - 60 Gew. % Zement und 30 - 40 Gew. % eines basischen Gesteinsmehls umfasst und dass der Zement wenigstens 30 Gew. % Puzzolanbestandteile als Zuschlagstoff aufweist, **dadurch gekennzeichnet, dass** das basische Gesteinsmehl mit Milchsäurebakterien angereichert ist.

2. Bindemittel nach Anspruch 1, **dadurch gekennzeichnet, dass** das basische Gesteinsmehl Korngrößen von 1 µm bis 90 µm aufweist.

3. Freiflächenbelagszubereitung mit Zugabewasser, Hartgesteinsplitt und einem Bindemittel nach Anspruch 1 oder 2, **dadurch gekennzeichnet, dass** das Massenverhältnis von Bindemittel zu Zugabewasser im Bereich von 1 : 0,4 bis 1 : 0,6 und das Massenverhältnis von Bindemittel zu Hartgesteinsplitt im Bereich von 1 : 6 bis 1 : 7 liegt.

4. Freiflächenbelagszubereitung nach Anspruch 3, **dadurch gekennzeichnet, dass** der Hartgesteinsplitt Korngrößen von 2 mm bis 5 mm aufweist.

## Claims

1. Binding agent for producing an open-space covering, based on hard stone grit, with cement, wherein the binding agent comprises 52-60 wt.% cement and 30-40 wt.% of an alkaline stone dust, and that the cement comprises at least 30 wt.% of pozzolanic components as an additive, **characterised in that** the alkaline stone dust is enriched with lactobacilli.

2. Binding agent as claimed in claim 1, **characterised in that** the alkaline stone dust has particle sizes of 1 µm to 90 µm.

3. Open-space covering preparation having mixing water, hard stone grit and a binding agent as claimed in claim 1 or 2, **characterised in that** the mass ratio of binding agent to mixing water is in the range of 1:0.4 to 1:0.6 and the mass ratio of binding agent to hard stone grit is in the range of 1:6 to 1:7.

4. Open-space covering preparation as claimed in claim 3, **characterised in that** the hard stone grit has particle sizes of 2 mm to 5 mm.

## Revendications

1. Liant pour fabriquer un revêtement de surface extérieure à base de gravier de roche dure avec du ciment, le liant comprenant de 52 à 60% en poids de ciment et 30 à 40% en poids d'une poudre de roche basique et le ciment comprenant au moins 30% en poids d'éléments de pouzzolane en complément, **caractérisé en ce que** la poudre de roche basique est enrichie avec des bactéries d'acide lactique.

2. Liant selon la revendication 1, **caractérisé en ce que** la poudre de roche basique présente des granulométries de 1 µm à 90 µm.

3. Préparation de revêtement de surface extérieure avec de l'eau ajoutée, du gravier de roche dure et un liant selon la revendication 1 ou 2, **caractérisée en ce que** le rapport de masse du liant avec l'eau ajoutée est de l'ordre de 1 : 0,4 à 1 : 0,6 et le rapport de masse du liant avec le gravier de roche dure est de l'ordre de 1 : 6 à 1 : 7.

4. Préparation de revêtement de surface extérieure selon la revendication 3, **caractérisée en ce que** le gravier de roche dure présente des granulométries de 2 mm à 5 mm.
